(19) Europäisches Patentamt
European Patent Office
Office européen des brevets

(11) **EP 3 197 748 B1**

(12) **EUROPÄISCHE PATENTSCHRIFT**

(45) Veröffentlichungstag und Bekanntmachung des Hinweises auf die Patenterteilung:
**11.08.2021   Patentblatt 2021/32**

(51) Int Cl.:
*B62D 5/04* (2006.01)          *H02P 29/032* (2016.01)
*H02P 6/16* (2016.01)

(21) Anmeldenummer: **15774886.4**

(22) Anmeldetag: **24.09.2015**

(86) Internationale Anmeldenummer:
**PCT/EP2015/071937**

(87) Internationale Veröffentlichungsnummer:
**WO 2016/046299 (31.03.2016 Gazette 2016/13)**

(54) **VERFAHREN ZUM ERKENNEN EINES FEHLERZUSTANDS IN EINEM BÜRSTENLOSEN GLEICHSTROMMOTOR**

METHOD FOR IDENTIFYING AN ERROR STATE IN A BRUSHLESS DIRECT CURRENT MOTOR

PROCÉDÉ D'IDENTIFICATION D'UNE CONDITION D'ERREUR DANS UN MOTEUR À COURANT CONTINU SANS BALAIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.09.2014   DE 102014219331**

(43) Veröffentlichungstag der Anmeldung:
**02.08.2017   Patentblatt 2017/31**

(73) Patentinhaber: **Continental Automotive GmbH**
**30165 Hannover (DE)**

(72) Erfinder:
• **GUNSELMANN, Christian**
**65760 Eschborn (DE)**
• **SADER, Frank**
**61462 Königstein (DE)**

(74) Vertreter: **Continental Corporation**
**c/o Continental Teves AG & Co. OHG**
**Intellectual Property**
**Guerickestraße 7**
**60488 Frankfurt a. Main (DE)**

(56) Entgegenhaltungen:
DE-A1-102010 063 692     US-A1- 2010 264 862
US-A1- 2011 062 904

• **None**

**Beschreibung**

Die Erfindung betrifft ein Verfahren zum Erkennen eines Fehlerzustands in einem bürstenlosen Gleichstrommotor, welcher eine Welle aufweist.

Bürstenlose Gleichstrommotoren, auch als BLDC-Motoren bezeichnet, werden heutzutage in zahlreichen Anwendungen verwendet. Beispielsweise werden sie in Kraftfahrzeugen zur Unterstützung der Lenkung verwendet. Dies stellt beispielsweise eine besonders sicherheitskritische Funktion dar, in welcher deshalb typischerweise Maßnahmen implementiert werden, um eventuelle Fehlerzustände des bürstenlosen Gleichstrommotors rechtzeitig zu erkennen und eine unkontrollierte Reaktion des Fahrzeugs zu vermeiden. Gemäß dem Stand der Technik erfolgt dies beispielsweise mit Hilfe einer Strommessung in einer oder mehreren Phasen des bürstenlosen Gleichstrommotors, oder mit Hilfe einer Spannungsmessung. Insbesondere lässt sich damit eine jeweilige Stromrichtung von Phasenströmen des bürstenlosen Gleichstrommotors und insbesondere deren Nulldurchgänge mit hoher Genauigkeit ermitteln.

Bei den aus dem Stand der Technik bekannten Varianten zum Ermitteln von Fehlerzuständen treten jedoch spezifische Nachteile auf. Eine Strommessung ist insbesondere mit hohen Kosten für eine dafür notwendige Messschaltung verbunden und liefert insbesondere bei niedriger Stromstärke nur eine geringe Signalgüte. Die Spannungsmessung ermöglicht nur eine geringe Aussagekraft über die Höhe der Stromstärke, benötigt rechenzeit- und speicherplatzintensive Algorithmen, erlaubt keine Überwachung bei Stillstand des Motors und hat eine lange Fehlererkennungszeit bei niedriger Drehzahl, da in diesem Fall mehrere vollständige elektrische Umdrehungen benötigt werden.

Aus der DE 10 2010 063 692 A1 ist ein Verfahren bekannt, bei dem die Position eines Rotors einer elektronisch kommutierten Synchronmaschine relativ zu Positionssensoren ermittelt wird, wobei nach einer ersten Positionsermittlung der lastlose Rotor durch Anlegen eines Spannungsvektors um einen vorgegebenen Winkel gedreht wird, woraufhin eine neue Positionsermittlung durchgeführt wird.

Aus der US 2010/264862 A1 ist ein Verfahren bekannt, bei dem bei ausgeschalteter Energieversorgung eines Motors aus einer induzierten Spannung einer Windung ein Korrekturwert berechnet wird.

Es ist deshalb eine Aufgabe der Erfindung, ein Verfahren zum Erkennen eines Fehlerzustands in einem bürstenlosen Gleichstrommotor vorzusehen, welches im Vergleich zu den bekannten Ausführungen verändert ist, wobei es insbesondere die Nachteile des Stands der Technik zumindest teilweise überwindet.

Dies wird erfindungsgemäß durch ein Verfahren nach Anspruch 1 erreicht. Vorteilhafte Ausgestaltungen können beispielsweise den Unteransprüchen entnommen werden. Der Inhalt der Ansprüche wird durch ausdrückliche Inbezugnahme zum Inhalt der Beschreibung gemacht.

Die Erfindung basiert insbesondere auf der Erkenntnis, dass durch das Berechnen der Winkelabweichung wie eben beschrieben Fehlerzustände eines bürstenlosen Gleichstrommotors besonders einfach erkannt werden können, wobei diese Winkelabweichung aus dem Stand der Technik nicht bekannt ist. Es handelt sich dabei um eine bevorzugt in geeigneter Weise festzusetzende Funktion oder Distribution, beispielsweise derart, wie sie weiter unten beschrieben wird.

Dies ist mit im Vergleich zum Stand der Technik deutlich geringeren Anforderungen an Rechenkapazität möglich. Zudem erlaubt das erfindungsgemäße Verfahren auch eine vorteilhafte Erkennung von Fehlerzuständen bei niedrigen Drehzahlen oder bei Stillstand des Motors.

Die Welle ist insbesondere dasjenige Bauteil des bürstenlosen Gleichstrommotors, welches im Betrieb des bürstenlosen Gleichstrommotors rotierend angetrieben wird. Der Wellenwinkel ist dabei typischerweise abhängig von einem Winkel, welchen die Welle in Bezug auf einen Referenzwinkel einnimmt. Der Ansteuerwinkel ist demgegenüber ein Winkel, welcher sich aus der Ansteuerung des bürstenlosen Gleichstrommotors durch die Ansteuerschaltung oder eine Treiberschaltung ergibt. Es handelt sich also hierbei um einen Winkel, welcher angibt, in welchem Zustand sich die Phasen bzw. Wicklungen aufgrund entsprechender Ansteuerung gerade befinden oder befinden sollen. Ein Sektor der Ansteuerschaltung entspricht dabei einem Winkelbereich des Ansteuerwinkels, in dem kein Vorzeichenwechsel der Phasenströme auftritt. Der Ansteuerwinkel liegt aus diesem Grund typischerweise nur mit einer begrenzten Auflösung vor, insbesondere in Form von diskreten Winkelwerten, deren Anzahl von der Gesamtzahl von Phasen des bürstenlosen Gleichstrommotors abhängt. Die Ansteuerschaltung ist dabei typischerweise diejenige Schaltung, welche den bürstenlosen Gleichstrommotor in definierter Weise mit elektrischer Energie versorgt, beispielsweise durch sukzessives Bestromen jeweiliger Phasen, beispielsweise von jeweils zwei Phasen des bürstenlosen Gleichstrommotors, in definierter Richtung.

Der Referenzwert ist derjenige Wert, welcher die kleinstmögliche Auflösung des Ansteuerwinkels angibt. Er ist typischerweise abhängig von der Anzahl von Phasen des bürstenlosen Gleichstrommotors. Wenn der bürstenlose Gleichstrommotor drei Phasen hat, so beträgt der Referenzwert beispielsweise bevorzugt 60°. Allgemein kann in vielen Fällen der Referenzwert durch Division von 180° durch die Anzahl der Phasen ermittelt werden. Er ist für die Ausführung des Verfahrens typischerweise vorgegeben, beispielsweise durch entsprechende Programmierung einer elektronischen Vorrichtung, in welcher das Verfahren ausgeführt wird. In einer Ausführung kann der Referenzwert auch 0° betragen, beispielsweise wenn die Winkelabweichung gleich der Winkeldifferenz ist, die Winkeldifferenz also unverändert als Winkelabweichung übernommen wird.

Bevorzugt erfolgt das Berechnen der Winkelabweichung aus der Winkeldifferenz folgendermaßen:

- wenn die Winkeldifferenz negativ ist:
  Winkelabweichung = Winkeldifferenz,
- wenn die Winkeldifferenz nicht negativ, aber kleiner oder gleich dem Referenzwert ist:
  Winkelabweichung = 0°,
- wenn die Winkeldifferenz größer als der Referenzwert ist:

$$\texttt{Winkelabweichung = Winkeldifferenz - Referenzwert.}$$

Bei einer derart berechneten Winkeldifferenz handelt es sich um einen Wert, welcher angibt, wie weit der Wellenwinkel von dem Ansteuerwinkel mathematisch entfernt ist. Die Winkelabweichung wird aus der Winkeldifferenz derart berechnet, dass sie berücksichtigt, dass der Ansteuerwinkel nur mit einer begrenzten Auflösung in Form von mehreren diskreten Winkelwerten vorliegt. Typischerweise ist die Winkelabweichung konstant 0°, wenn kein Fehlerzustand des bürstenlosen Gleichstrommotors vorliegt. Es sei verstanden, dass dies beispielsweise dazu verwendet werden kann, um positiv die Fehlerfreiheit des bürstenlosen Gleichstrommotors festzustellen.

Eine Vorschrift ist ein Algorithmus. Dies kann insbesondere bedeuten, dass bestimmte vordefinierte Rechenoperationen mit der Winkelabweichung ausgeführt werden, von deren Ergebnis abhängt, ob die Vorschrift den Fehlerzustand anzeigt oder nicht. Eine Vorschrift beinhaltet einen Vergleich mit einem vorgegebenen Muster. Dies kann eine Mustererkennung beinhalten. Hierfür gibt es unterschiedliche Ausführungsformen. Beispielsweise kann ein Muster einer halben Motordrehung mit einem Referenzmuster verglichen werden. Es können auch Muster mehrerer aufeinanderfolgender Umdrehungen gespeichert werden und zusammen mit einem Referenzmuster verglichen werden. Beispielsweise kann von den gespeicherten Mustern ein Mittelwertsmuster gebildet werden, welches jeweilige Mittelwerte der vorkommenden Winkelabweichungen enthält. Außerdem können auch weitere Systeminformationen, insbesondere solche, welche das Muster beeinflussen, mit in die Mustererkennung einbezogen werden.

Es können insbesondere weitere Systeminformationen wie zum Beispiel Drehrichtung, Drehmomentanforderung, Drehzahl, Zwischenkreisspannung oder andere Parameter der Ansteuerschaltung oder des bürstenlosen Gleichstrommotors beim Anwenden einer Vorschrift berücksichtigt werden. Damit kann die Zuverlässigkeit noch weiter erhöht werden. Dies kann beispielsweise im Rahmen einer durchzuführenden Mustererkennung erfolgen.

Bevorzugt erstreckt sich das jeweilige Anwenden einer Vorschrift zumindest über einen Bereich des Ansteuerwinkels von einem, zwei, drei oder mehreren Sektoren. Grundsätzlich kann sich das Anwenden einer jeweiligen Vorschrift über eine beliebige Zahl von Sektoren erstrecken. Es ist insbesondere bevorzugt, dass jeder Sektor einem Bereich des Wellenwinkels von 60° entspricht, wenn kein Fehlerzustand vorhanden ist. Dies ermöglicht insbesondere eine vorteilhafte Anwendung des Verfahrens auf einen bürstenlosen Gleichstrommotor, welcher drei Phasen aufweist. Bei einer anderen Anzahl von Phasen kann der Wert entsprechend angepasst werden.

Um Kurzschlüsse zu erkennen, erstreckt sich die Anwendung einer entsprechenden Vorschrift bevorzugt auf einen Bereich des Ansteuerwinkels von mindestens 180°. Es sei verstanden, dass die Erkennung grundsätzlich genauer und zuverlässiger wird, über je mehr Sektoren sich das Anwenden einer Vorschrift erstreckt.

Sofern sich das Anwenden einer Vorschrift über mehr als 360° erstreckt, so ist insbesondere eine Mittelwertbildung über mehrere Umläufe möglich. Es können also hintereinander entsprechende Parameter aufgenommen und daraus Werte für die Winkelabweichung berechnet werden, wobei jeweilige Werte der Winkelabweichung, welche zu jeweils sich periodisch wiederholenden oder periodisch korrespondierenden Werten einer unabhängigen Variable wie Wellenwinkel oder Zeit gehören, zur Bildung eines Mittelwerts verwendet werden. Die derart berechneten Mittelwerte werden dann für das Anwenden einer Vorschrift verwendet.

Gemäß einer Ausführung wird der Ansteuerwinkel über eine Spannungsmessung an Anschlüssen des Gleichstrommotors ermittelt. Bevorzugt wird hierzu eine Differenzbildung zwischen einem gemessenen Puls-Pausen-Verhältnis und einem Steuer-Puls-Pausen-Verhältnis ermittelt. Das Steuer-Puls-Pausen-Verhältnis ist dabei dasjenige Puls-Pausen-Verhältnis, welches von der Ansteuerschaltung vorgegeben wird. Dieses ist von der Ansteuerschaltung her bekannt. Wenn das gemessene Puls-Pausen-Verhältnis von dem Steuer-Puls-Pausen-Verhältnis abweicht, deutet dies auf einen Stromfluss in der entsprechenden Motorphase hin. Das Vorzeichen der Abweichung (Differenz) entspricht dabei dem Vorzeichen des Phasenstroms.

Gemäß einer weiteren Ausführung, welche separat angewendet werden kann oder auch mit der eben beschriebenen Spannungsmessung kombiniert werden kann, wird der Ansteuerwinkel über eine Strommessung von Phasenströmen des bürstenlosen Gleichstrommotors ermittelt. Dies ermöglicht insbesondere in gewissen Situationen eine höhere Genauigkeit.

Die Winkelwerte des Ansteuerwinkels werden bevorzugt aus einer Gruppe ausgewählt, welche aus 0°, dem Referenzwert und einer Anzahl von ganzzahligen Vielfachen des Referenzwerts besteht. Bezüglich des Referenzwerts gelten die obigen Ausführungen, insbesondere hinsichtlich dessen Abhängigkeit von der Anzahl der Phasen.

Gemäß einer bevorzugten Ausführung besteht die Gruppe aus den Werten 0°, 60°, 120°, 180°, 240° und 300°. Gemäß einer hierzu alternativen, ebenso bevorzugten Ausführung besteht die Gruppe aus den Werten -180°, -120°, -60°, 0°, 60° und 120°. Derartige Ausführungen haben sich insbesondere für dreiphasige bürstenlose Gleichstrommotoren als vorteilhaft erwiesen.

Gemäß einer Ausführung wird der Wellenwinkel aus dem Ausgangssignal eines der Welle zugeordneten Winkelsensors ermittelt, welches um einen Winkelanteil eines Blindstroms korrigiert wird. Der Winkelsensor nimmt dabei insbesondere den derzeitigen Drehwinkel der Welle bezüglich eines bestimmten Referenzwinkels auf. Die beschriebene Korrektur um Blindströme, insbesondere Blindströme von Spulen bzw. Phasen des bürstenlosen Gleichstrommotors, ermöglicht eine vorteilhafte Kompensation solcher Blindströme und damit eine häufig bessere Durchführung des erfindungsgemäßen Verfahrens. Es sei jedoch verstanden, dass der Wellenwinkel auch ohne Kompensation von Blindströmen verwendet werden kann, beispielsweise kann er unmittelbar aus dem Ausgangssignal eines der Welle zugeordneten Winkelsensors ermittelt werden.

Nachfolgend werden einige Vorschriften beschrieben, welche im Rahmen des Verfahrens implementiert werden können. Es sei verstanden, dass die Vorschriften sowohl einzeln wie auch in beliebiger Kombination angewendet werden können. Sie können also insbesondere auch miteinander kombiniert werden, wobei beispielsweise auf errechnete Werte des Winkelabstands auch mehrere Vorschriften hintereinander angewendet werden können, um unterschiedliche Fehlerzustände festzustellen. Es sei des Weiteren verstanden, dass die Vorschriften nicht zwingend so ausgeführt sind, dass es zwischen jeweiligen Bereichen, innerhalb welchen sie einen Fehlerzustand anzeigen, keine Überlappungen gibt. Vielmehr kann es zwischen den erwähnten Vorschriften durchaus Überlappungen geben, so dass bei Anwendung von zwei oder mehr Vorschriften auf das gleiche Signal zwei oder mehr Fehlerzustände angezeigt werden können. Dies liegt insbesondere darin begründet, dass auch die Fehlerzustände von ihrer Ursache her überlappen, beispielsweise können Fehlerzustände Grenzzustände anderer Fehlerzustände sein, oder es können Fehlerzustände fließend ineinander übergehen.

Gemäß einer Ausführung sind die jeweiligen verwendeten Vorschriften derart implementiert, dass ein jeweiliger Fehlerzustand nur dann erkannt wird, wenn alle beschriebenen bzw. angegebenen Bedingungen erfüllt sind. Der Fachmann wird je nach Ausbildung einer zu verwendenden Auswertungsschaltung geeignete Lösungen finden, welche eine Überprüfung der genannten Charakteristika für den jeweiligen Fehlerzustand ermöglichen. Beispielsweise können Übergänge von positiven oder negativen Werten auf 0° durch eine entsprechende Differenzbildung von Werten der Winkelabweichung erkannt werden. Insbesondere können hierzu zwei aufeinanderfolgende Werte der Winkelabweichung verwendet werden, wobei sich das Aufeinanderfolgen beispielsweise auf benachbarte diskrete Werte des Wellenwinkels oder der Zeit als unabhängige Variable bezieht.

Unter einer Änderung des Ansteuerwinkels sei insbesondere ein Sprung des Ansteuerwinkels von einem diskreten Wert auf einen anderen diskreten Wert verstanden. Ein Übergang der Winkelabweichung bei einer solchen Änderung des Ansteuerwinkels wird typischerweise zwischen zwei Werten der Winkelabweichung ermittelt, welche unmittelbar vor und nach einer solchen Änderung und/oder gleichzeitig mit einer solchen Änderung des Ansteuerwinkels auftreten.

Gemäß einer Ausführung zeigt eine Vorschrift, welche einem Fehlerzustand "Kurzschluss zwischen zwei Motoranschlüssen" zugeordnet ist, diesen Fehlerzustand an, wenn die Winkelabweichung bei drei aufeinanderfolgenden Änderungen des Ansteuerwinkels folgende hintereinander auftretende Übergänge zeigt:

- Verbleib konstant auf 0°,
- Änderung von einem positiven oder negativen ersten Wert auf 0°,
- Änderung von 0° auf einen zweiten Wert mit entgegengesetztem Vorzeichen zum ersten Wert.

Es sei erwähnt, dass unter einem Verbleib konstant auf 0° auch ein Übergang verstanden wird bzw. ein solcher Verbleib als Übergang verstanden wird. Bei diesem Übergang erfolgt jedoch keine Änderung der Winkelabweichung. Der erste und der zweite Wert liegen typischerweise betragsmäßig in der gleichen Größenordnung. Dies kann beispielsweise bedeuten, dass sie sich betragsmäßig um weniger als 1 %, weniger als 5 %, weniger als 10 %, weniger als 20 % oder weniger als 30 % unterscheiden. Das Verfahren kann in solchen Fällen bevorzugt derart ausgeführt werden, dass ein jeweiliger Fehlerzustand nur dann angezeigt wird, wenn die maximale betragsmäßige, relative oder absolute Abweichung der beiden Werte voneinander kleiner als ein vorgegebener Wert ist. Dies gilt auch für andere hier beschriebene oder sonstigen Fehlerzustände. Es sei verstanden, dass sich die Beträge des ersten und des zweiten Werts insbesondere ändern können, wenn sich zwischen dem Auftreten des ersten und des zweiten Werts Betriebsparameter des bürstenlosen Gleichstrommotors, wie beispielsweise Stromstärke, Spannung oder Drehmomentanforderung ändern. Die hier gegebene Definition für eine gleiche Größenordnung von Werten gilt auch für die weiter unten beschriebenen Ausführungen.

Gemäß einer Ausführung zeigt eine Vorschrift, welche einem Fehlerzustand "Winkeloffset" zugeordnet ist, diesen Fehlerzustand an, wenn die Winkelabweichung bei jeder Änderung des Ansteuerwinkels eine Änderung von einem von 0° verschiedenen Wert auf 0° aufweist, insbesondere wenn dieser Wert immer das gleiche Vorzeichen aufweist und/oder betragsmäßig konstant ist oder zumindest hinsichtlich der Größenordnung betragsmäßig gleich bleibt. Damit kann ein Winkeloffset, welcher beispielsweise seine Ursache in einem Fehler eines Winkelgebers oder Winkelsensors oder in einem fehlerhaften Kalibrierungswert für die Ansteuerschaltung haben kann, erkannt werden.

Gemäß einer Ausführung zeigt eine Vorschrift, welche einem Fehlerzustand "Unterbrechung einer Phase" zugeordnet ist, diesen Fehlerzustand an, wenn die Winkelabweichung bei einer unmittelbaren Änderung des Ansteuerwinkels von einem negativen Wert auf einen positiven Wert oder von einem positiven Wert auf einen negativen Wert einen unmittelbaren Übergang von einem positiven oder negativen ersten Wert zu einem zweiten Wert mit entgegengesetztem Vorzeichen zum ersten Wert aufweist.

Gemäß einer Ausführung zeigt eine Vorschrift, welche einem Fehlerzustand "erhöhter Widerstand in einer Phase" zugeordnet ist, diesen Fehlerzustand an, wenn die Winkelabweichung bei drei aufeinanderfolgenden Änderungen des Ansteuerwinkels folgende hintereinander auftretende Übergänge zeigt:

- Änderung von 0° auf einen positiven oder negativen ersten Wert,
- Änderung von einem zweiten Wert mit entgegengesetztem Vorzeichen zum ersten Wert auf 0°,
- Verbleib konstant auf 0°.

Der erste Wert und der zweite Wert liegen dabei typischerweise betragsmäßig in der gleichen Größenordnung. Es sei erwähnt, dass bei diesem Fehlerzustand typischerweise alle Phasen verschoben sind, da die Summe aller Phasenströme typischerweise, d.h. insbesondere bei entsprechender Verschaltung, Null ergibt.

Gemäß einer Ausführung zeigt eine Vorschrift, welche einem Fehlerzustand "Kurzschluss zwischen zwei Windungen an der jeweiligen Phasenmitte" zugeordnet ist, diesen Fehlerzustand an, wenn die Winkelabweichung bei drei aufeinanderfolgenden Änderungen des Ansteuerwinkels folgende hintereinander auftretende Übergänge zeigt:

- Verbleib konstant auf 0°,
- Änderung von einem positiven oder negativen ersten Wert auf 0°,
- Verbleib konstant auf 0°.

Gemäß einer Ausführung zeigt eine Vorschrift, welche einem Fehlerzustand "Überbrückung einer Phase" zugeordnet ist, diesen Fehlerzustand an, wenn die Winkelabweichung bei drei aufeinanderfolgenden Änderungen des Ansteuerwinkels folgende hintereinander auftretende Übergänge zeigt:

- Änderung von 0° auf einen positiven oder negativen ersten Wert,
- Änderung von einem zweiten Wert mit entgegengesetztem Vorzeichen zum ersten Wert auf 0°,
- Verbleib konstant auf 0°.

Der erste Wert und der zweite Wert liegen dabei typischerweise betragsmäßig in der gleichen Größenordnung. In gewissen Ausführungen kann das Verfahren so implementiert sein, dass der Fehlerzustand "Überbrückung einer Phase" nur dann erkannt wird, wenn der zweite Wert betragsmäßig kleiner ist als der erste Wert, was bei einigen Implementierungen auftreten kann. Es sei erwähnt, dass bei diesem Fehlerzustand typischerweise eine überbrückte Phase keine Induktivität mehr hat.

Es sei verstanden, dass jeweilige Werte, insbesondere erste und zweite Werte, welche bei jeweiligen Fehlerzuständen auftreten, in einigen Ausführungen jeweils innerhalb typischer Wertebereiche auftreten, welche für den jeweiligen Fehlerzustand charakteristisch sind. Durch den Vergleich mit entsprechend abgespeicherten Wertebereichen kann ein Fehlerzustand besser ermittelt oder plausibilisiert werden. Derartige Wertebereiche können von Fachmann im Einzelfall durch Messung oder Simulation ermittelt werden. Sie können in der Ausführung des erfindungsgemäßen Verfahrens vorteilhaft verwendet werden. Beispielsweise kann ein jeweiliger Vergleich eines Werts der Winkelabweichung, beispielsweise an einem Übergang unmittelbar vor oder nach einem Sprung auf 0°, mit jeweiligen Wertebereichen verglichen werden. Der jeweilige Fehlerzustand wird dann vorzugsweise nur dann erkannt, wenn der Wert innerhalb des jeweiligen Wertebereichs liegt. Ein Wertebereich kann insbesondere durch einen oberen Grenzwert und einen unteren Grenzwert definiert werden. Die Auswertung kann auch unter Betrachtung jeweiliger Absolutbeträge, insbesondere der Winkelabweichung, erfolgen.

Ein Muster der Winkelabweichung, welches für einen Fehlerzustand charakteristisch ist, wiederholt sich typischerweise zweimal je vollständiger Wellenumdrehung. Dies kann für die Erkennung im Rahmen des Verfahrens verwendet werden.

Gemäß einer bevorzugten Ausführung wird ein Übergang nur dann als solcher im Rahmen der Anwendung einer Vorschrift verwendet, wenn ein Integral über die Winkelabweichung als Funktion des Wellenwinkels oder als Funktion der Zeit von einem Punkt mit vorgegebenem winkelmäßigem oder zeitlichem Abstand vor oder nach dem Übergang bis zum Übergang betragsmäßig mindestens einen vorgegebenen Wert aufweist. Damit kann sichergestellt werden, dass ein erkannter Übergang nicht nur auf einer zufälligen Fluktuation, sondern tatsächlich auf einem Fehlerzustand beruht. Wenn die Winkelabweichung als Funktion des Wellenwinkels betrachtet wird, handelt es sich dabei bevorzugt um einen winkelmäßigen Abstand. Wenn die Winkelabweichung als Funktion der Zeit betrachtet wird, handelt es sich bevorzugt um einen zeitlichen Abstand. Beispielsweise kann die Winkelabweichung vor einem Übergang oder nach einem Übergang eine positive oder negative Rampe, d.h. beispielsweise eine Rampe mit positiven oder negativen Werten, aufweisen. Es hat sich gezeigt, dass derartige Rampen charakteristisch für viele Fehlerzustände sind. Durch die eben beschriebene Berechnung von Integralen und Vergleichen mit vorgegebenen Werten kann sichergestellt werden, dass eine solche Rampe tatsächlich vorhanden ist, ohne die Rampe im Einzelnen analysieren zu müssen. Es sei jedoch darauf hingewiesen, dass die Rampen grundsätzlich auch separat zur Erkennung von Fehlerzuständen verwendet werden können, beispielsweise im Rahmen einer anders ausgeführten Mustererkennung.

Gemäß einer Ausführung weist das Verfahren ferner einen Schritt der Detektion von Phasen auf, welche von dem Fehlerzustand betroffen sind, und zwar durch Ermittlung, welche Arten von Übergängen bei welchen Wellenwinkeln und/oder Ansteuerwinkeln auftreten. Damit kann beispielsweise ermittelt werden, bei welcher Phase oder welchen Phasen der entsprechende Fehlerzustand auftritt. Beispielsweise können die weiter oben beschriebenen Abfolgen von Übergängen jeweiligen Werten von Wellenwinkeln und/oder Ansteuerwinkeln zugeordnet werden, was eine Ermittlung der betroffenen Phase oder der betroffenen Phasen erlaubt.

Gemäß einer bevorzugten Ausführung des Verfahrens wird ein Fehlerzustand bei stehendem Motor, d.h. bei stehendem bürstenlosem Gleichstrommotor, durch Detektion einer Winkelabweichung, welche betragsmäßig einen vorgegebenen Schwellenwert für mindestens eine vorgegebene Zeitspanne übersteigt, erkannt. Dies ermöglicht es, auch bei stehendem Motor einen Fehlerzustand zu erkennen. Diese Ausführung basiert insbesondere auf der Erkenntnis, dass eine Abweichung des Werts der Winkelabweichung von 0° im Regelfall mit einem Fehlerzustand verbunden ist. Wenn also bei stehendem Motor eine solche Abweichung von 0° auftritt, so deutet dies mit hoher Wahrscheinlichkeit auf einen Fehlerzustand hin. Typischerweise ist es jedoch nicht möglich, bei stehendem Motor die Art des Fehlerzustands zu erkennen. Somit kann gemäß einer weiteren bevorzugten Ausführung vorgesehen sein, dass die Verwendung des Motors im Fall eines bei stehendem Motor erkannten Fehlerzustands unmittelbar deaktiviert wird, beispielsweise kann eine Lenkunterstützung, in welcher der bürstenlose Gleichstrommotor verwendet wird, deaktiviert werden. Dies kann unkontrolliertes Verhalten der Lenkunterstützung verhindern.

Es sei verstanden, dass beispielsweise auch weitere Fehler wie eine falsche Motorkommutierung, die mit einer Verschiebung der Nulldurchgänge der Phasenströme einhergeht, oder jede andere Fehlerart, insbesondere wenn sie mit einer Verschiebung der Nulldurchgänge der Phasenströme einhergeht, anhand charakteristischer Muster erkannt werden kann.

Die Erfindung betrifft des Weiteren auch eine elektronische Steuerungseinrichtung, welche zur Ausbildung des erfindungsgemäßen Verfahrens konfiguriert ist. Des Weiteren betrifft die Erfindung auch ein nichtflüchtiges computerlesbares Speichermedium, welches Programmcode enthält, bei dessen Ausführung durch einen Prozessor ein erfindungsgemäßes Verfahren ausgeführt wird. Hinsichtlich des erfindungsgemäßen Verfahrens kann dabei auf alle beschriebenen Ausführungen und Varianten zurückgegriffen werden.

Weitere Merkmale und Vorteile wird der Fachmann den nachfolgend mit Bezug auf die beigefügte Zeichnung beschriebenen Ausführungsbeispielen entnehmen. Dabei zeigen:

Fig. 1: eine beispielhafte schematische Beschaltung eines bürstenlosen Gleichstrommotors,
Fig. 2: Simulationen von Wellenwinkel, Ansteuerwinkel und Winkelabweichung im fehlerfreien Fall,
Fig. 3 bis 8: Simulationen von Wellenwinkel, Ansteuerwinkel und Winkelabweichung bei verschiedenen Fehlerzuständen.

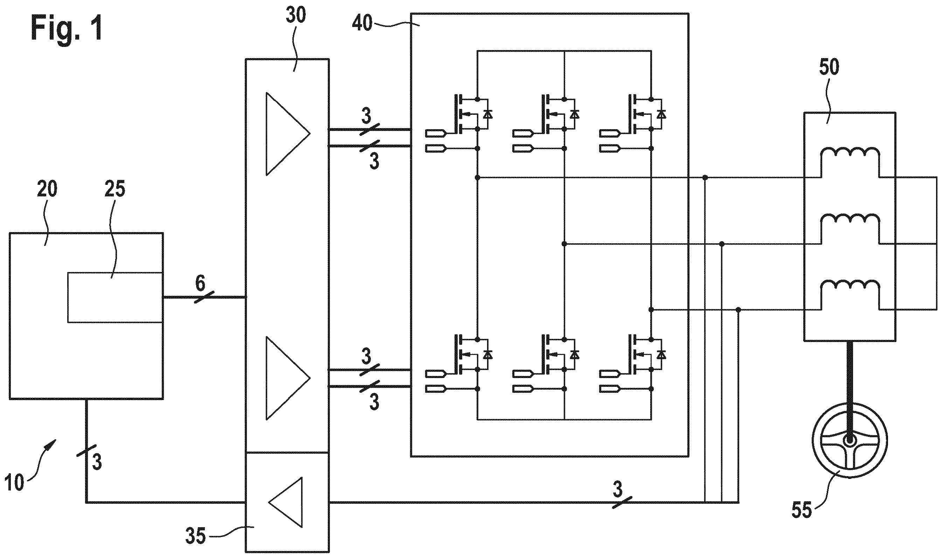

Fig. 1 zeigt einen bürstenlosen Gleichstrommotor 50 mit einer Ansteuerschaltung 10. Es sei verstanden, dass die Ansteuerschaltung 10 hier auch zum Erkennen von Fehlerzuständen ausgebildet ist. Der bürstenlose Gleichstrommotor 50 ist vorliegend dreiphasig ausgebildet. Er dient zur Unterstützung einer nicht weiter dargestellten Lenkung eines Fahrzeugs, welche mittels einer Lenkhandhabe in Form eines Lenkrads 55 betätigt werden kann. Es sei jedoch verstanden, dass die Erfindung auch auf autonom fahrende Fahrzeuge anwendbar ist, welche beispielsweise keine Lenkhandhabe haben und/oder in welchen der bürstenlose Gleichstrommotor 50 das Fahrzeug selbständig lenkt.

Die Ansteuerschaltung 10 weist einen Mikrocontroller 20 auf, in welchem nicht weiter dargestellte Prozessormittel und Speichermittel ausgebildet sind, wobei in den Speichermitteln Programmcode enthalten ist, bei deren Ausführung durch die Prozessormittel sich der Mikrocontroller 20 in definierter Weise verhält. Der Mikrocontroller 20 weist insbesondere ein Pulsweiten-Modulationsmodul 25 auf, welches zur Ausgabe pulsweitenmodulierter Signale ausgebildet ist.

Die Ansteuerschaltung 10 weist des Weiteren eine Treiberschaltung in Form einer Gate Drive Unit (GDU) 30 auf. Außerdem weist die Ansteuerschaltung 10 ein Power Chip Module (PCM) 40 auf.

Elektrische Verbindungen zwischen den einzelnen Komponenten sind teilweise so dargestellt, dass neben der jeweiligen Verbindung eine Zahl steht. Diese Zahl gibt an, wie viele Phasen in der jeweiligen Verbindung übertragen werden.

Vorliegend ist das Pulsweiten-Modulationsmodul 25 mit der Gate Drive Unit 30 und diese wiederum mit dem Power Chip Module 40 verbunden. Damit werden insgesamt geeignete Ansteuersignale für den bürstenlosen Gleichstrommotor 50 erzeugt. Der bürstenlose Gleichstrommotor 50 ist an jeweiligen Ausgangsphasen des Power Chip Module 40 angeschlossen und wird somit in bekannter Weise angesteuert. Insbesondere können typischerweise in einem jeweiligen Zyklus die drei Phasen des bürstenlosen Gleichstrommotors 50 derart angesteuert werden, dass nacheinander sechs unterschiedliche Magnetfelder erzeugt werden. Diese haben typischerweise Richtungen, welche sich im zeitlichen Verlauf im Uhrzeigersinn oder gegen den Uhrzeigersinn um jeweils 60° drehen. Damit wird eine nicht dargestellte Welle des bürstenlosen Gleichstrommotors 50 entsprechend in Rotation versetzt. Die drei Ausgänge des Power Chip Module 40, welche mit dem bürstenlosen Gleichstrommotor 50 verbunden sind, sind des Weiteren mit einer Phasenspannungs-Rückkoppelschaltung 35 verbunden. Über die Phasenspannungs-Rückkoppelschaltung 35, welche wiederum mit dem Mikrocontroller 20 verbunden ist, erhält der Mikrocontroller 20 Informationen über die an den drei Eingängen des bürstenlosen Gleichstrommotors 50 anliegenden Spannungen.

Der Mikrocontroller 20 steuert das Pulsweiten-Modulationsmodul 25 mit einem bekannten Steuer-Puls-Pausen-Verhältnis an, welches anhand gewünschter Betriebsparameter wie Winkelgeschwindigkeit oder Drehmoment des bürstenlosen Gleichstrommotors 50 festgelegt wird. Aus den zurückgekoppelten Signalen von den Eingängen des bürstenlosen Gleichstrommotors 50 berechnet der Mikrocontroller 20 ebenfalls jeweilige Puls-Pausen-Verhältnisse und vergleicht diese mit den Steuer-Puls-Pausen-Verhältnissen. Aus den jeweiligen Abweichungen wird ein Ansteuerwinkel berechnet, welcher zumindest im fehlerfreien Betrieb angibt, in welcher Lage sich das Magnetfeld im bürstenlosen Gleichstrommotor 50 derzeit befindet. Dieser Ansteuerwinkel kann jeweils einen der Werte -180°, -120°, -60°, 0°, 60° und 120° einnehmen. Systembedingt ist die Genauigkeit für die Messung von Zwischenwerten der genannten Ansteuerwinkel geringer. Für das vorliegende Verfahren werden nur die genannten Ansteuerwinkel benötigt.

Die nicht dargestellte Welle des bürstenlosen Gleichstrommotors 50 wird über einen ebenfalls nicht dargestellten Winkelsensor hinsichtlich ihres Rotationswinkels überwacht. Der Winkelsensor liefert entsprechende Signale an den Mikrocontroller 20. Der Mikrocontroller 20 korrigiert das von dem Winkelsensor erhaltene Signal um jeweilige Blindströme des bürstenlosen Gleichstrommotors 50, welche er anhand eines aus dem Stand der Technik bekannten Verfahrens ermittelt. Hieraus berechnet der Mikrocontroller 20 einen Wellenwinkel, welcher anzeigend ist für eine jeweilige Drehposition der Welle.

Es sei verstanden, dass diese Berechnungen laufend wiederholt durchgeführt werden.

Nach der Berechnung eines jeweiligen Wellenwinkels und eines Ansteuerwinkels zieht der Mikrocontroller 20 den Ansteuerwinkel von dem Wellenwinkel ab und erhält somit eine Winkeldifferenz. Anschließend berechnet der Mikrocontroller 20 eine Winkelabweichung basierend auf folgender Vorschrift:

- Wenn die Winkeldifferenz negativ ist:
  Winkelabweichung = Winkeldifferenz,
- Wenn die Winkeldifferenz nicht negativ, aber kleiner oder gleich 60° ist:
  Winkelabweichung = 0°,
- Wenn die Winkeldifferenz größer als 60° ist:

$$\texttt{Winkelabweichung = Winkeldifferenz - 60°.}$$

Aus dem Verlauf der Winkelabweichung als Funktion der Zeit kann der Mikrocontroller 20 Fehlerzustände des bürstenlosen Gleichstrommotors 50 erkennen. Hierzu führt er mit der berechneten Winkelabweichung eine jeweilige Mustererkennung durch. Insbesondere können dabei die nachfolgend mit Bezug auf die weiteren Figuren beschriebenen Fehlerzustände oder auch ein fehlerfreier Betrieb des bürstenlosen Gleichstrommotors 50 erkannt werden.

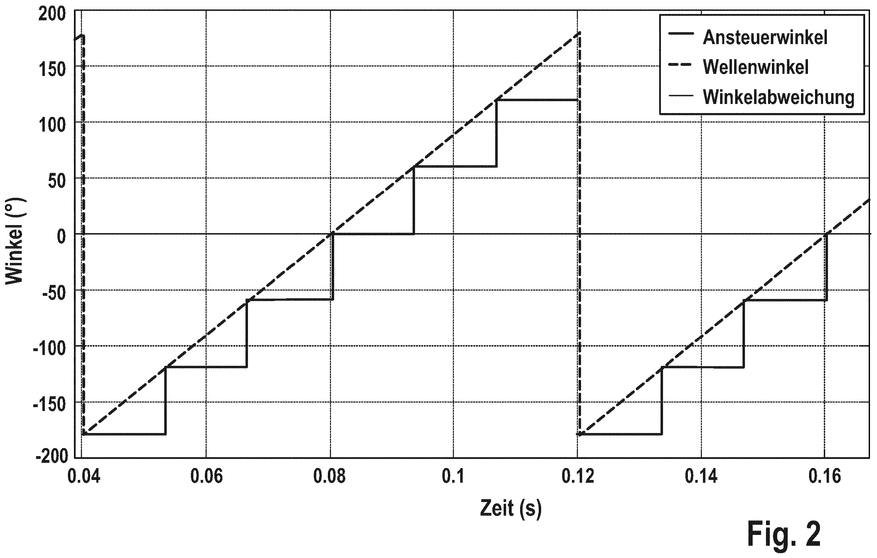

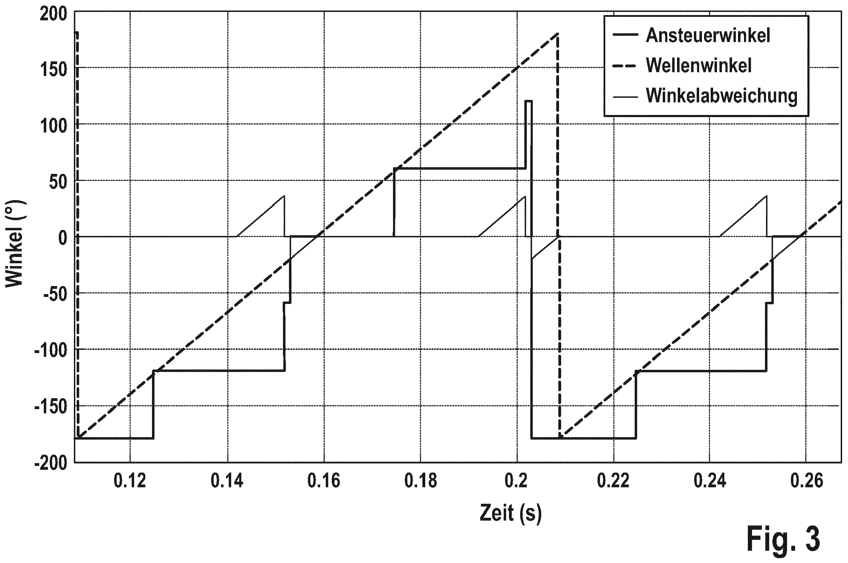

Fig. 2 zeigt beispielhafte Simulationen von Ansteuerwinkel, Wellenwinkel und Winkelabweichung in einem fehlerfreien Fall. Die Fig. 3 bis 8 zeigen beispielhafte Simulationen von Ansteuerwinkel, Wellenwinkel und Winkelabweichung bei unterschiedlichen Fehlerzuständen. Die Simulationen werden hier beispielhaft gegeben, um insbesondere auch typische Erkennungsmodi für die entsprechenden Fehlerzustände erläutern zu können. Sie beziehen sich auf einen speziellen, hier simulierten Fall mit bestimmten Parametern. Es sei verstanden, dass auch andere Erkennungsmodi, mit welchen der Mikrocontroller 20 einen jeweiligen Fehlerzustand oder auch einen fehlerfreien Betrieb erkennen kann, vom Fachmann implementiert werden können. Derartige Implementierungen gelten als Teil der Offenbarung dieser Anmeldung.

Die jeweiligen Fig. 2 bis 8 sind derart aufgebaut, dass auf der jeweiligen horizontalen Achse die Zeit angetragen ist und auf der jeweiligen vertikalen Achse der Winkel angetragen ist. Die Einheit der Zeit ist Sekunde, die Einheit des Winkels ist Grad (°). Der Ansteuerwinkel nimmt lediglich die diskreten Werte -180°, -120°, -60°, 0°, 60° und 120° ein. Es erfolgt somit ein treppenförmiger Verlauf des Ansteuerwinkels. Der Wellenwinkel ist grundsätzlich geradlinig von -180° bis 180° und springt dann wieder auf -180°. Die Winkelabweichung hat meistens einen Wert von 0° und weicht lediglich an manchen Stellen davon ab. Typischerweise sind bei Abweichungen von 0° jeweilige positive oder negative Rampen ausgebildet. Es sei verstanden, dass anhand der beschriebenen Charakteristika die jeweiligen Kurven für Ansteuerwinkel, Wellenwinkel und Winkelabweichung eindeutig identifiziert werden können. Teilweise schneiden sich die Kurven oder verlaufen über gewisse Strecken übereinander, so dass sie an dieser Stelle nicht unterscheidbar sind. Zumindest in Bezug auf das europäische Patentrecht sei erwähnt, dass zusätzlich zur eindeutigen Identifizierbarkeit über die eben beschriebenen Verlaufsformen auch die in den ursprünglichen Unterlagen enthaltenen farblichen Unterscheidungen einen Teil der Offenbarung bilden (siehe Entscheidung T 1544/08).

Fig. 2 zeigt einen fehlerfreien Zustand. Wie deutlich zu sehen ist, verbleibt die Winkelabweichung dabei konstant auf 0°. Es erfolgen keinerlei Abweichungen von diesem Wert. Wenn ein solcher Zustand vorhanden ist, was von dem Mikrocontroller 20 beispielsweise dadurch detektiert werden kann, dass er die Winkelabweichung über einen gewissen Zeitraum oder über einen gewissen Winkelbereich des Wellenwinkels von beispielsweise 180° oder 360° auf Abweichungen von 0° untersucht, so kann positiv ein fehlerfreier Zustand festgestellt werden. Es sei des Weiteren erwähnt, dass jeweilige Abstände zwischen Übergängen des Ansteuerwinkels im fehlerfreien Zustand, welcher in Fig. 2 dargestellt ist, identisch sind.

Fig. 3 zeigt den Fehlerzustand "Kurzschluss zwischen zwei Motoranschlüssen". Wie leicht erkannt wird, sind dabei Sektoren des Ansteuerwinkels im Vergleich zu Fig. 2 verschoben. Dies führt zu positiven und negativen Flanken der Winkelabweichung. Besonders signifikante Übergänge treten dabei insbesondere bei Änderungen des Ansteuerwinkels auf. Bei diesen wertet der Mikrocontroller 20 die Winkelabweichung jeweils aus und erkennt den dargestellten Fehlerzustand, wenn die Winkelabweichung bei drei aufeinanderfolgenden Änderungen des Ansteuerwinkels folgende hintereinander auftretenden Übergänge zeigt:

- Verbleib konstant auf 0°,
- Änderung von einem positiven oder negativen ersten Wert auf 0°,
- Änderung von 0° auf einen zweiten Wert mit entgegengesetztem Vorzeichen zum ersten Wert.

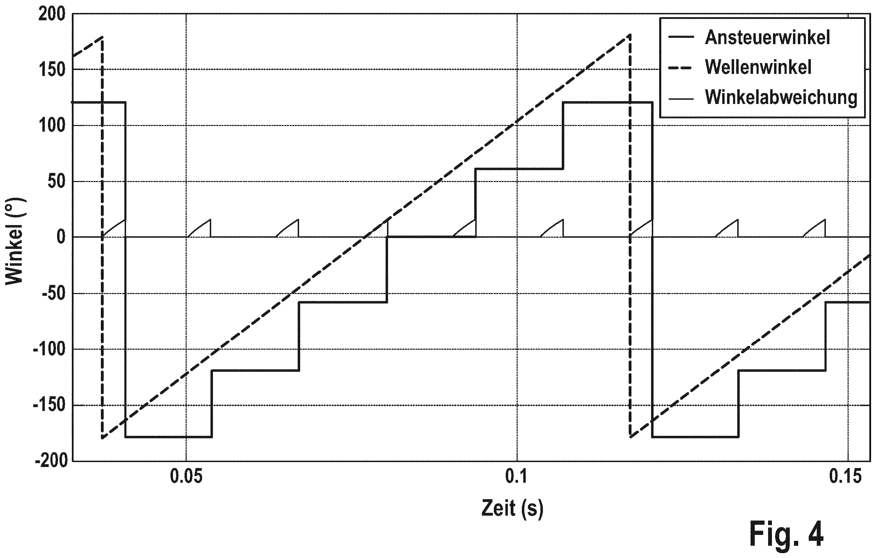

Fig. 4 zeigt den Fehlerzustand "Winkeloffset". Wie leicht erkannt wird, sind dabei Sektoren des Ansteuerwinkels im Vergleich zu Fig. 2 nicht verschoben. Die Kurve des Wellenwinkels ist jedoch im Vergleich zu Fig. 2 verschoben. Dies führt zu positiven, ansteigenden Flanken der Winkelabweichung. Besonders signifikante Übergänge treten dabei insbesondere bei Änderungen des Ansteuerwinkels auf. Bei diesen wertet der Mikrocontroller 20 die Winkelabweichung jeweils aus und erkennt den dargestellten Fehlerzustand, wenn die Winkelabweichung bei jeder Änderung des Ansteuerwinkels eine Änderung von einem von 0° verschiedenen Wert auf 0° aufweist, insbesondere wenn dieser Wert immer das gleiche Vorzeichen aufweist und/oder betragsmäßig konstant ist oder zumindest hinsichtlich der Größenordnung betragsmäßig gleich bleibt.

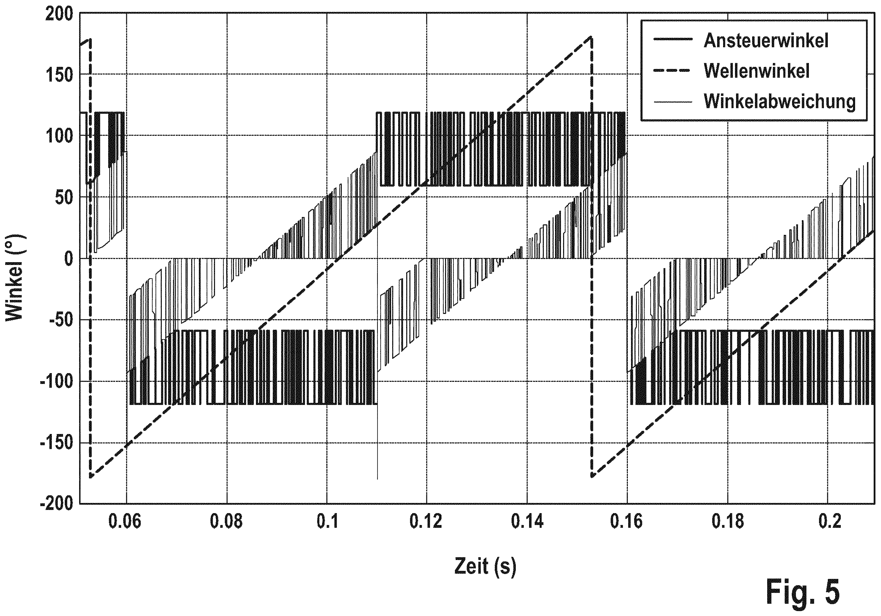

Fig. 5 zeigt den Fehlerzustand "Unterbrechung einer Motorphase". Dabei wechselt der Ansteuerwinkel nur noch zwischen vier Werten, wobei zwischen jeweils zwei Werten gleichen Vorzeichens zufällige Wechsel möglich sind. Dies liegt daran, dass bei Unterbrechung einer Motorphase bei dieser Motorphase ein gewisses Rauschen auftritt, welches zu derartigen Sprüngen führt. Die Winkelabweichung nimmt dabei positive und negative Werte bis ca. 30° an, wobei der zugehörige Winkelbereich insbesondere als "toter Winkelbereich" bezeichnet wird. Im restlichen Winkelbereich kann die Winkelabweichung zwischen 0° und Werten bis zu 90° wechseln. Erkannt wird der Fehlerzustand "Unterbrechung einer Phase" von dem Mikrocontroller 20 dann, wenn die Winkelabweichung bei einer unmittelbaren Änderung des Ansteuerwinkels von einem negativen Wert auf einen positiven Wert oder von einem positiven Wert auf einen negativen Wert einen unmittelbaren Übergang von einem positiven oder negativen ersten Wert zu einem zweiten Wert mit entgegengesetztem Vorzeichen zum ersten Wert aufweist. Dies entspricht beispielsweise dem in Fig. 5 zwischen den Zeiten 0,1 s und 0,12 s dargestellten Übergang.

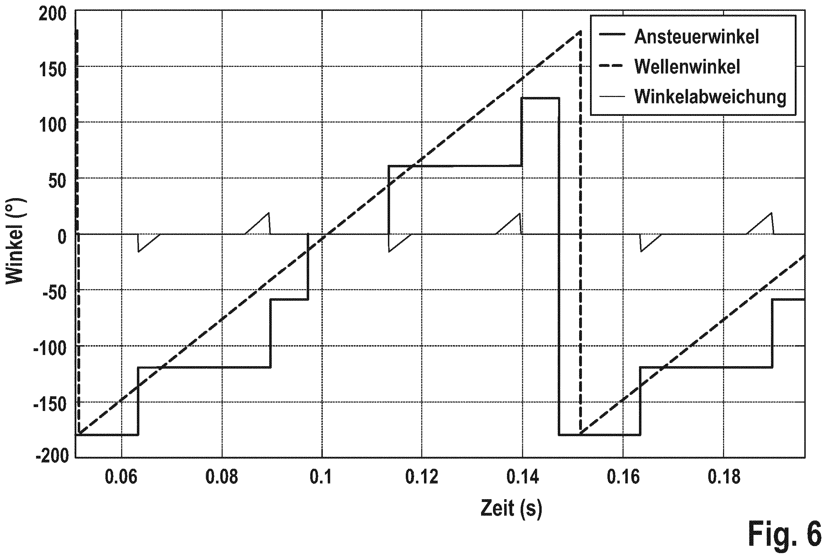

Fig. 6 zeigt den Fehlerzustand "Erhöhter Widerstand in einer Phase". Wie leicht erkannt wird, sind dabei Sektoren des Ansteuerwinkels im Vergleich zu Fig. 2 verschoben. Dies führt zu positiven und negativen Flanken der Winkelabweichung. Besonders signifikante Übergänge treten dabei insbesondere bei Änderungen des Ansteuerwinkels auf. Bei diesen wertet der Mikrocontroller 20 die Winkelabweichung jeweils aus und erkennt den dargestellten Fehlerzustand, wenn die Winkelabweichung bei drei aufeinanderfolgenden Änderungen des Ansteuerwinkels folgende hintereinander auftretenden Übergänge zeigt:

- Änderung von 0° auf einen positiven oder negativen ersten Wert,
- Änderung von einem zweiten Wert mit entgegengesetztem Vorzeichen zum ersten Wert auf 0°,

- Verbleib konstant auf 0°.

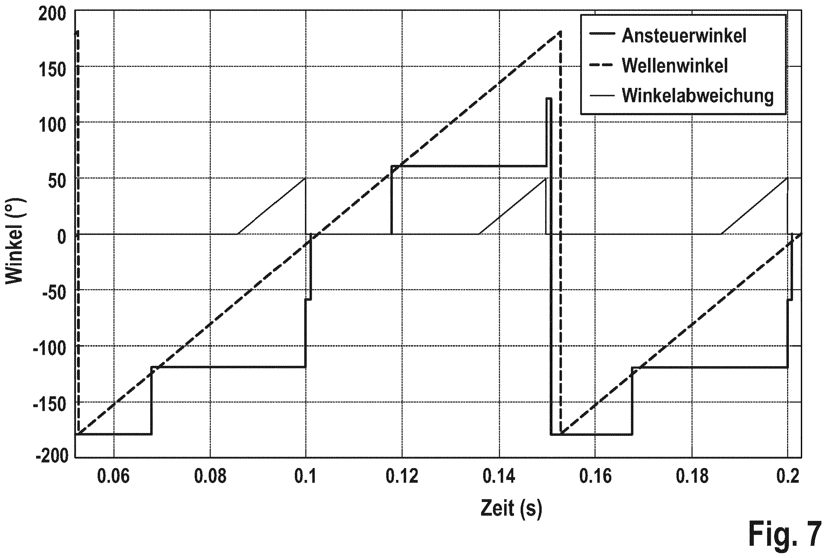

Fig. 7 zeigt den Fehlerzustand "Kurzschluss zwischen zwei Windungen an der jeweiligen Phasenmitte". Wie leicht erkannt wird, sind dabei Sektoren des Ansteuerwinkels im Vergleich zu Fig. 2 verschoben. Dies führt zu positiven und negativen Flanken der Winkelabweichung. Besonders signifikante Übergänge treten dabei insbesondere bei Änderungen des Ansteuerwinkels auf. Bei diesen wertet der Mikrocontroller 20 die Winkelabweichung jeweils aus und erkennt den dargestellten Fehlerzustand, wenn die Winkelabweichung bei drei aufeinanderfolgenden Änderungen des Ansteuerwinkels folgende hintereinander auftretenden Übergänge zeigt:

- Verbleib konstant auf 0°,
- Änderung von einem positiven oder negativen ersten Wert auf 0°,
- Verbleib konstant auf 0°.

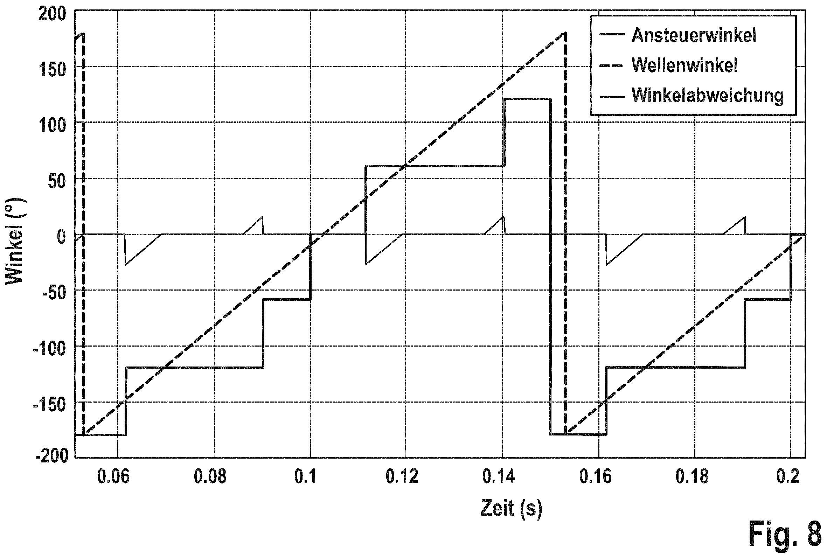

Fig. 8 zeigt den Fehlerzustand "Überbrückung einer Phase". Wie leicht erkannt wird, sind dabei Sektoren des Ansteuerwinkels im Vergleich zu Fig. 2 verschoben. Dies führt zu positiven und negativen Flanken der Winkelabweichung. Besonders signifikante Übergänge treten dabei insbesondere bei Änderungen des Ansteuerwinkels auf. Bei diesen wertet der Mikrocontroller 20 die Winkelabweichung jeweils aus und erkennt den dargestellten Fehlerzustand, wenn die Winkelabweichung bei drei aufeinanderfolgenden Änderungen des Ansteuerwinkels folgende hintereinander auftretenden Übergänge zeigt:

- Änderung von 0° auf einen positiven oder negativen ersten Wert,
- Änderung von einem zweiten Wert mit entgegengesetztem Vorzeichen zum ersten Wert auf 0°,
- Verbleib konstant auf 0°.

Um die Zuverlässigkeit der Erkennung zu erhöhen, berechnet der Mikrocontroller 20 vor der Erkennung eines Übergangs der Winkelabweichung ein Integral der Winkelabweichung als Funktion der Zeit sowohl von einem Punkt mit vorgegebenem zeitlichem Abstand vor dem Übergang wie auch von einem Punkt mit vorgegebenem zeitlichen Abstand nach dem Übergang bis zum erkannten Übergang. Nur wenn dieses Integral betragsmäßig einen vorgegebenen Wert übersteigt, wird der Übergang als solcher im Rahmen der Erkennung eines Fehlerzustands verwendet. Dies vermeidet die Erkennung von Fehlerzuständen aufgrund zufälliger Fluktuationen, welche nicht auf Fehlerzuständen basieren.

Es sei verstanden, dass durch genaue Auswertung der Lage der jeweiligen Übergänge, welche in den Fig. 3 bis 8 dargestellt sind, auch ein Rückschluss auf die jeweils betroffene Phase oder die betroffenen Phasen des bürstenlosen Gleichstrommotors 50 möglich ist. Hierzu wertet der Mikrocontroller 20 die Übergänge dahingehend aus, bei welchem Wellenwinkel oder bei welchem Übergang des Ansteuerwinkels sie auftreten. Somit kann nicht nur der Fehlerzustand, sondern auch die genaue Phase erkannt werden. Bei bestimmten Fehlerzuständen, welche in dem Mikrocontroller 20 gespeichert sind, wird der weitere Betrieb des bürstenlosen Gleichstrommotors 20 unmittelbar unterbunden, um eine unkontrollierte Reaktion der Lenkung zu vermeiden.

Wenn der bürstenlose Gleichstrommotor 50 nicht in Betrieb ist, seine Welle sich also insbesondere nicht dreht, überwacht der Mikrocontroller 20 trotzdem laufend die Winkelabweichung. Sollte über eine vorgegebene Zeitspanne die Winkelabweichung einen vorgegebenen Schwellenwert übersteigen, so wird trotz stehenden bürstenlosen Gleichstrommotors 50 ein Fehlerzustand erkannt. Obwohl nicht erkannt wird, um welchen Fehlerzustand es sich dabei handelt, kann dies die Sicherheit weiter erhöhen. In diesem Fall wird der weitere Betrieb des bürstenlosen Gleichstrommotors 50 unmittelbar deaktiviert, da keine Informationen über den vorliegenden Fehlerzustand vorliegen und ein weiterer Betrieb in Bezug auf eine mögliche unkontrollierte Reaktion der Lenkung des Fahrzeugs zu riskant wäre.

Es sei verstanden, dass die Richtung der Abweichungen des Werts der Winkelabweichung von 0°, also ob die Winkelabweichung einen positiven oder negativen Wert aufweist, durch die Drehrichtung des bürstenlosen Gleichstrommotors 50 vorgegeben wird. Wird die Drehrichtung umgekehrt, ändert sich typischerweise auch das Vorzeichen der jeweiligen Abweichung. Es kann sich dabei beispielsweise auch die Art des Übergangs ändern, also beispielsweise kann ein Übergang von einem positiven oder negativen Wert auf 0° zu einem Übergang von 0° auf einen positiven oder negativen Wert werden, und umgekehrt. Entsprechende Variationen der in dieser Anmeldung beschriebenen Ausführungen und Charakteristika gelten als Bestandteil der Offenbarung dieser Anmeldung.

**Patentansprüche**

1. Verfahren zum Erkennen eines Fehlerzustands in einem bürstenlosen Gleichstrommotor (50), welcher eine Welle aufweist,

wobei das Verfahren folgende Schritte aufweist:

- Aufnehmen eines der Welle zugeordneten Wellenwinkels,

**gekennzeichnet durch** die weiteren Schritte:

- Aufnehmen eines Ansteuerwinkels, welcher für jeden einer Anzahl von gemessenen Sektoren einer Ansteuerschaltung (10) des Gleichstrommotors (50) einen jeweils zugeordneten Winkelwert angibt, wobei der Ansteuerwinkel ein Winkel ist, welcher sich aus der Ansteuerung des bürstenlosen Gleichstrommotors (50) durch die Ansteuerschaltung (10) oder eine Treiberschaltung ergibt, und wobei ein Sektor der Ansteuerschaltung (10) einem Winkelbereich des Ansteuerwinkels entspricht, in dem kein Vorzeichenwechsel von Phasenströmen des bürstenlosen Gleichstrommotors (50) auftritt,
- Berechnen einer Winkeldifferenz durch Subtraktion des Ansteuerwinkels von dem Wellenwinkel,
- Berechnen einer Winkelabweichung aus der Winkeldifferenz unter Verwendung eines Referenzwerts, wobei der Referenzwert derjenige Wert ist, welcher die kleinstmögliche Auflösung des Ansteuerwinkels angibt,
- Anwenden einer Anzahl von vorgegebenen Vorschriften auf die Winkelabweichung als Funktion des Wellenwinkels oder der Zeit, wobei jeder Vorschrift ein Fehlerzustand zugeordnet ist,
wobei eine Vorschrift ein Algorithmus oder ein Vergleich mit einem vorgegebenen Muster ist und
- Feststellen eines Fehlerzustands, wenn eine Vorschrift, welcher der Fehlerzustand zugeordnet ist, bei der Anwendung den Fehlerzustand anzeigt.

2. Verfahren nach Anspruch 1,

- wobei die Winkelabweichung aus der Winkeldifferenz folgendermaßen berechnet wird:

  - Wenn die Winkeldifferenz negativ ist:
  Winkelabweichung = Winkeldifferenz,

- Wenn die Winkeldifferenz nicht negativ, aber kleiner oder gleich dem Referenzwert ist:
Winkelabweichung = 0°,
- Wenn die Winkeldifferenz größer als der Referenzwert ist:

$$\texttt{Winkelabweichung = Winkeldifferenz - Referenzwert.}$$

3. Verfahren nach einem der vorhergehenden Ansprüche,

- wobei sich das jeweilige Anwenden einer Vorschrift zumindest über einen Bereich des Ansteuerwinkels von einem, zwei, drei oder mehreren Sektoren erstreckt,
- wobei bevorzugt jeder Sektor einem Bereich des Wellenwinkels von 60° entspricht, wenn kein Fehlerzustand vorhanden ist.

4. Verfahren nach einem der vorhergehenden Ansprüche,

- wobei der Ansteuerwinkel über eine Spannungsmessung an Anschlüssen des Gleichstrommotors (50) ermittelt wird,
- und zwar bevorzugt über eine Differenzbildung zwischen einem gemessenen Puls-Pausen-Verhältnis und einem Steuer-Puls-Pausen-Verhältnis;
und/oder
- wobei der Ansteuerwinkel über eine Strommessung von Phasenströmen des bürstenlosen Gleichstrommotors (50) ermittelt wird.

5. Verfahren nach einem der vorhergehenden Ansprüche,

- wobei die Winkelwerte des Ansteuerwinkels aus einer Gruppe ausgewählt werden, welche aus 0°, dem Referenzwert und einer Anzahl von ganzzahligen Vielfachen des Referenzwerts besteht,
- wobei die Gruppe bevorzugt aus den Werten 0°, 60°, 120°, 180°, 240° und 300° oder aus den Werten -180°, -120°, -60°, 0°, 60° und 120° besteht.

**6.** Verfahren nach einem der vorhergehenden Ansprüche,

- wobei der Wellenwinkel aus dem Ausgangssignal eines der Welle zugeordneten Winkelsensors ermittelt wird, welches um einen Winkelanteil eines Blindstroms korrigiert wird.

**7.** Verfahren nach einem der vorhergehenden Ansprüche,

- wobei eine Vorschrift, welche einem Fehlerzustand Kurzschluss zwischen zwei Motoranschlüssen zugeordnet ist, diesen Fehlerzustand anzeigt,
- wenn die Winkelabweichung bei drei aufeinanderfolgenden Änderungen des Ansteuerwinkels folgende hintereinander auftretenden Übergänge zeigt:

- Verbleib konstant auf 0°,
- Änderung von einem positiven oder negativen ersten Wert auf 0°,
- Änderung von 0° auf einen zweiten Wert mit entgegengesetztem Vorzeichen zum ersten Wert.

**8.** Verfahren nach einem der vorhergehenden Ansprüche,

- wobei eine Vorschrift, welche einem Fehlerzustand Winkeloffset zugeordnet ist, diesen Fehlerzustand anzeigt,
- wenn die Winkelabweichung bei jeder Änderung des Ansteuerwinkels eine Änderung von einem von 0° verschiedenen Wert auf 0° aufweist.

**9.** Verfahren nach einem der vorhergehenden Ansprüche,

- wobei eine Vorschrift, welche einem Fehlerzustand Unterbrechung einer Phase zugeordnet ist, diesen Fehlerzustand anzeigt,
- wenn die Winkelabweichung bei einer unmittelbaren Änderung des Ansteuerwinkels von einem negativen Wert auf einen positiven Wert oder von einem positiven Wert auf einen negativen Wert einen unmittelbaren Übergang von einem positiven oder negativen ersten Wert zu einem zweiten Wert mit entgegengesetztem Vorzeichen zum ersten Wert aufweist.

**10.** Verfahren nach einem der vorhergehenden Ansprüche,

- wobei eine Vorschrift, welche einem Fehlerzustand erhöhter Widerstand in einer Phase zugeordnet ist, diesen Fehlerzustand anzeigt,
- wenn die Winkelabweichung bei drei aufeinanderfolgenden Änderungen des Ansteuerwinkels folgende hintereinander auftretenden Übergänge zeigt:

- Änderung von 0° auf einen positiven oder negativen ersten Wert,
- Änderung von einem zweiten Wert mit entgegengesetztem Vorzeichen zum ersten Wert auf 0°,
- Verbleib konstant auf 0°.

**11.** Verfahren nach einem der vorhergehenden Ansprüche,

- wobei eine Vorschrift, welche einem Fehlerzustand Kurzschluss zwischen zwei Windungen an der jeweiligen Phasenmitte zugeordnet ist, diesen Fehlerzustand anzeigt,
- wenn die Winkelabweichung bei drei aufeinanderfolgenden Änderungen des Ansteuerwinkels folgende hintereinander auftretenden Übergänge zeigt:

- Verbleib konstant auf 0°,
- Änderung von einem positiven oder negativen ersten Wert auf 0°,
- Verbleib konstant auf 0°.

**12.** Verfahren nach einem der vorhergehenden Ansprüche,

- wobei eine Vorschrift, welche einem Fehlerzustand Überbrückung einer Phase zugeordnet ist, diesen Fehlerzustand anzeigt,
- wenn die Winkelabweichung bei drei aufeinanderfolgenden Änderungen des Ansteuerwinkels folgende hintereinander auftretenden Übergänge zeigt:

- Änderung von 0° auf einen positiven oder negativen ersten Wert,
- Änderung von einem zweiten Wert mit entgegengesetztem Vorzeichen zum ersten Wert auf 0°,
- Verbleib konstant auf 0°.

13. Verfahren nach einem der vorhergehenden Ansprüche,
wobei ein Übergang der Winkelabweichung zwischen zwei Werten nur dann als solcher im Rahmen der Anwendung einer Vorschrift verwendet wird, wenn ein Integral über die Winkelabweichung als Funktion des Wellenwinkels oder als Funktion der Zeit von einem Punkt mit vorgegebenem winkelmäßigem oder zeitlichem Abstand vor oder nach dem Übergang bis zum Übergang betragsmäßig mindestens einen vorgegebenen Wert aufweist.

14. Verfahren nach einem der vorhergehenden Ansprüche,

- welches ferner einen Schritt der Detektion von Phasen, welche von dem Fehlerzustand betroffen sind, aufweist,
- und zwar durch Ermittlung, welche Arten von Übergängen der Winkelabweichung zwischen zwei Werten bei welchen Wellenwinkeln und/oder Ansteuerwinkeln auftreten.

15. Verfahren nach einem der vorhergehenden Ansprüche

- bei welchem ein Fehlerzustand bei stehendem bürstenlosem Gleichstrommotor (50) durch Detektion einer Winkelabweichung, welche betragsmäßig einen vorgegebenen Schwellenwert für mindestens eine vorgegebene Zeitspanne übersteigt, erkannt wird.

## Claims

1. Method for identifying an error state in a brushless direct current motor (50) having a shaft, wherein the method comprises the following steps:

- recording a shaft angle assigned to the shaft, **characterized by** the further steps of:

- recording a drive angle which indicates a respectively assigned angle value for each of a number of measured sectors of a drive circuit (10) of the direct current motor (50), wherein the drive angle is an angle which results from the driving of the brushless direct current motor (50) by the drive circuit (10) or a driver circuit, and wherein a sector of the drive circuit (10) corresponds to an angle range of the drive angle in which no change in sign of phase currents of the brushless direct current motor (50) occurs,
- calculating an angle difference by subtracting the drive angle from the shaft angle,
- calculating an angle deviation from the angle difference using a reference value, wherein the reference value is that value which indicates the smallest possible resolution of the drive angle,
- applying a number of predefined specifications to the angle deviation as a function of the shaft angle or time, wherein an error state is assigned to each specification, wherein a specification is an algorithm or a comparison with a predefined pattern and
- ascertaining an error state if a specification to which the error state is assigned indicates the error state upon the application.

2. Method according to Claim 1,

- wherein the angle deviation is calculated from the angle difference as follows:

- if the angle difference is negative:
Angle deviation = angle difference,
- if the angle difference is not negative but is less than or equal to the reference value:
Angle deviation = 0°,
- if the angle difference is greater than the reference value:

$$\text{Angle deviation = angle difference − reference}$$
$$\text{value.}$$

3. Method according to of the preceding claims,

   - wherein the process of respectively applying a specification extends at least over a range of the drive angle of one, two, three or more sectors,
   - wherein preferably each sector corresponds to a range of the shaft angle of 60° if no error state is present.

4. Method according to any of the preceding claims,

   - wherein the drive angle is determined by means of a voltage measurement at terminals of the direct current motor (50),
   - specifically preferably by means of difference formation between a measured mark-space ratio and a control mark-space ratio;
   and/or
   - wherein the drive angle is determined by means of a current measurement of phase currents of the brushless direct current motor (50).

5. Method according to any of the preceding claims,

   - wherein the angle values of the drive angle are selected from a group consisting of 0°, the reference value and a number of integer multiples of the reference value,
   - wherein the group preferably consists of the values 0°, 60°, 120°, 180°, 240° and 300° or of the values - 180°, -120°, -60°, 0°, 60° and 120°.

6. Method according to any of the preceding claims,

   - wherein the shaft angle is determined from the output signal of an angle sensor assigned to the shaft, which output signal is corrected by an angle portion of a reactive current.

7. Method according to any of the preceding claims,

   - wherein a specification which is assigned to an error state of short circuit between two motor terminals indicates this error state,
   - if the angle deviation in the case of three successive changes in the drive angle exhibits the following transitions occurring one after another:

     - remaining constant at 0°,
     - change from a positive or negative first value to 0°,
     - change from 0° to a second value having an opposite sign to the first value.

8. Method according to any of the preceding claims,

   - wherein a specification which is assigned to an error state of angle offset indicates this error state,
   - if the angle deviation in the case of each change in the drive angle has a change from a value different than 0° to 0°.

9. Method according to any of the preceding claims,

   - wherein a specification which is assigned to an error state of interruption of a phase indicates this error state,
   - if the angle deviation in the case of a direct change in the drive angle from a negative value to a positive value or from a positive value to a negative value has a direct transition from a positive or negative first value to a second value having an opposite sign to the first value.

10. Method according to any of the preceding claims,

- wherein a specification which is assigned to an error state of increased resistance in a phase indicates this error state,
- if the angle deviation in the case of three successive changes in the drive angle exhibits the following transitions occurring one after another:

- change from 0° to a positive or negative first value,
- change from a second value having an opposite sign to the first value to 0°,
- remaining constant at 0°.

11. Method according to any of the preceding claims,

- wherein a specification which is assigned to an error state of short circuit between two turns at the respective phase centre indicates this error state,
- if the angle deviation in the case of three successive changes in the drive angle exhibits the following transitions occurring one after another:

- remaining constant at 0°,
- change from a positive or negative first value to 0°,
- remaining constant at 0°.

12. Method according to any of the preceding claims,

- wherein a specification which is assigned to an error state of bridging of a phase indicates this error state,
- if the angle deviation in the case of three successive changes in the drive angle exhibits the following transitions occurring one after another:

- change from 0° to a positive or negative first value,
- change from a second value having an opposite sign to the first value to 0°,
- remaining constant at 0°.

13. Method according to any of the preceding claims,
wherein a transition of the angle deviation between two values is used as such in the context of the application of a specification only if an integral over the angle deviation as a function of the shaft angle or as a function of time from a point with a predefined angular or temporal distance before or after the transition to the transition has at least one predefined value in terms of magnitude.

14. Method according to any of the preceding claims,

- which furthermore comprises a step of detecting phases which are affected by the error state,
- specifically by determining which types of transitions of the angle deviation between two values occur for which shaft angles and/or drive angles.

15. Method according to any of the preceding claims,

- wherein an error state is identified in the case of a stationary brushless direct current motor (50) by detecting an angle deviation which in terms of magnitude exceeds a predefined threshold value for at least one predefined time period.

**Revendications**

1. Procédé d'identification d'une condition d'erreur dans un moteur à courant continu sans balais (50) qui présente un arbre,
le procédé présentant l'étape suivante consistant à :

- enregistrer un angle d'arbre associé à l'arbre,

**caractérisé par** les étapes supplémentaires consistant à :

- enregistrer un angle de commande qui indique pour chacun d'un nombre de secteurs mesurés d'un circuit de commande (10) du moteur à courant continu (50) une valeur angulaire respectivement associée, l'angle de commande étant un angle qui résulte de la commande du moteur à courant continu sans balais (50) par le circuit de commande (10) ou un circuit d'attaque, et un secteur du circuit de commande (10) correspondant à une plage angulaire de l'angle de commande dans laquelle aucun changement de signe des courants de phase du moteur à courant continu sans balais (50) ne se produit,
- calculer une différence angulaire par la soustraction de l'angle de commande de l'angle d'arbre,
- calculer un écart angulaire à partir de la différence angulaire en utilisant une valeur de référence, la valeur de référence étant la valeur qui indique la résolution minimale de l'angle de commande,
- appliquer un nombre de règles prédéfinies à l'écart angulaire en fonction de l'angle d'arbre ou du temps, chaque règle étant associée à une condition d'erreur, une règle étant un algorithme ou une comparaison avec un schéma prédéfini, et
- constater une condition d'erreur si une règle à laquelle est associée la condition d'erreur indique la condition d'erreur lors de l'application.

2. Procédé selon la revendication 1,

- dans lequel l'écart angulaire est calculé à partir de la différence angulaire comme suit :

  - si la différence angulaire est négative :
  écart angulaire = différence angulaire,
  - si la différence angulaire n'est pas négative mais inférieure ou égale à la valeur de référence :
  écart angulaire = 0°,
  - si la différence angulaire est supérieure à la valeur de référence :

```
écart  angulaire = différence  angulaire -
valeur de référence.
```

3. Procédé selon l'une quelconque des revendications précédentes, dans lequel

   - l'application respective d'une règle couvre au moins une plage de l'angle de commande d'un, deux, trois ou plusieurs secteurs,
   - chaque secteur correspond de préférence à une plage de l'angle d'arbre de 60° s'il n'existe aucune condition d'erreur.

4. Procédé selon l'une quelconque des revendications précédentes, dans lequel

   - l'angle de commande est déterminé par une mesure de tension aux bornes du moteur à courant continu (50),
   - notamment de préférence en formant la différence entre un rapport impulsion mesurée/pause et un rapport impulsion de commande/pause ; et/ou
   - l'angle de commande est déterminé par une mesure de courant des courants de phase du moteur à courant continu sans balais (50).

5. Procédé selon l'une quelconque des revendications précédentes, dans lequel

   - les valeurs d'angle de l'angle de commande sont sélectionnées dans un groupe composé de 0°, de la valeur de référence et d'un nombre de multiples entiers de la valeur de référence,
   - le groupe est de préférence composé des valeurs de 0°, 60°, 120°, 180°, 240° et 300° ou des valeurs de -180°, -120°, -60°, 0°, 60° et 120°.

6. Procédé selon l'une quelconque des revendications précédentes,

   - dans lequel l'angle d'arbre est déterminé à partir du signal de sortie d'un capteur d'angle associé à l'arbre qui est corrigé d'une part d'angle d'un courant réactif.

7. Procédé selon l'une quelconque des revendications précédentes,

- dans lequel une règle qui est associée à une condition d'erreur d'un court-circuit entre deux bornes de moteur indique cette condition d'erreur
- si l'écart angulaire présente pour trois changements consécutifs de l'angle de commande les transitions suivantes apparaissant les unes après les autres :

    - maintien constant à 0°,
    - passage d'une première valeur positive ou négative à 0°,
    - passage de 0° à une deuxième valeur de signe opposé à la première valeur.

8. Procédé selon l'une quelconque des revendications précédentes,

- dans lequel une règle qui est associée à une condition d'erreur d'un décalage angulaire indique cette condition d'erreur
- si l'écart angulaire présente à chaque changement de l'angle de commande un passage à 0° d'une valeur différente de 0°.

9. Procédé selon l'une quelconque des revendications précédentes,

- dans lequel une règle qui est associée à une condition d'erreur d'une interruption d'une phase indique cette condition d'erreur
- si l'écart angulaire présente pour un passage direct de l'angle de commande d'une valeur négative à une valeur positive ou d'une valeur positive à une valeur négative une transition directe d'une première valeur positive ou négative à une deuxième valeur de signe opposé à la première valeur.

10. Procédé selon l'une quelconque des revendications précédentes,

- dans lequel une règle qui est associée à une condition d'erreur d'une résistance accrue dans une phase indique cette condition d'erreur
- si l'écart angulaire présente pour trois changements consécutifs de l'angle de commande les transitions suivantes apparaissant les unes après les autres :

    - passage de 0° à une première valeur positive ou négative,
    - passage à 0° d'une deuxième valeur de signe opposé à la première valeur,
    - maintien constant à 0°.

11. Procédé selon l'une quelconque des revendications précédentes,

- dans lequel une règle qui est associée à une condition d'erreur d'un court-circuit entre deux enroulements au centre de phase respectif indique cette condition d'erreur
- si l'écart angulaire présente pour trois changements consécutifs de l'angle de commande les transitions suivantes apparaissant les unes après les autres :

    - maintien constant à 0°,
    - passage d'une première valeur positive ou négative à 0°,
    - maintien constant à 0°.

12. Procédé selon l'une quelconque des revendications précédentes,

- dans lequel une règle qui est associée à une condition d'erreur d'un pontage d'une phase indique cette condition d'erreur
- si l'écart angulaire présente pour trois changements consécutifs de l'angle de commande les transitions suivantes apparaissant les unes après les autres :

    - passage de 0° à une première valeur positive ou négative,
    - passage à 0° d'une deuxième valeur de signe opposé à la première valeur,
    - maintien constant à 0°.

13. Procédé selon l'une quelconque des revendications précédentes,

dans lequel une transition de l'écart angulaire entre deux valeurs n'est utilisée en tant que telle dans le cadre de l'application d'une règle que si une intégrale sur l'écart angulaire en fonction de l'angle d'arbre ou en fonction du temps à partir d'un point ayant une distance angulaire ou temporelle prédéfinie avant ou après la transition jusqu'à la transition présente en grandeur au moins une valeur prédéfinie.

14. Procédé selon l'une quelconque des revendications précédentes,

- présentant en outre une étape de détection de phases qui sont concernées par la condition d'erreur,
- notamment en déterminant quels types de transition de l'écart angulaire apparaissent entre deux valeurs pour quels angles d'arbre et/ou angles de commande.

15. Procédé selon l'une quelconque des revendications précédentes

- dans lequel une condition d'erreur pour un moteur à courant continu sans balais (50) à l'arrêt est identifiée par la détection d'un écart angulaire dont la grandeur dépasse une valeur seuil prédéfinie pendant au moins un laps de temps prédéfini.

Fig. 1

Fig. 2

EP 3 197 748 B1

Fig. 3

EP 3 197 748 B1

Fig. 4

Fig. 5

EP 3 197 748 B1

Fig. 6

EP 3 197 748 B1

Fig. 7

EP 3 197 748 B1

Fig. 8

EP 3 197 748 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010063692 A1
- US 2010264862 A1